(19) Europäisches Patentamt
European Patent Office
Office européen des brevets

(11) **EP 2 316 911 B1**

(12) **FASCICULE DE BREVET EUROPEEN**

(45) Date de publication et mention
de la délivrance du brevet:
**20.03.2013 Bulletin 2013/12**

(51) Int Cl.:
*C10L 1/12* *(2006.01)*     *C10L 10/04* *(2006.01)*
*F02C 7/30* *(2006.01)*     *C10L 10/00* *(2006.01)*

(21) Numéro de dépôt: **09305819.6**

(22) Date de dépôt: **08.09.2009**

(54) **Procédé de fonctionnement d'un équipement thermique alimenté par des composés à base d'aluminium et de titane pour réduire la corrosion et l'encrassement à haute température.**

Funktionsverfahren einer Wärmeausrüstung, die von Komponenten auf Aluminium- und Titanbasis versorgt wird, um das Rosten und die Verschmutzung bei hohen Temperaturen zu reduzieren

Operating method of a thermal device supplied with aluminium- and titanium-based compounds to reduce corrosion and clogging at high temperatures.

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(43) Date de publication de la demande:
**04.05.2011 Bulletin 2011/18**

(73) Titulaire: **GE Energy Products France SNC 90000 Belfort (FR)**

(72) Inventeurs:
• **Moliere, Michel
90000, BELFORT (FR)**
• **Regnier, Jean-Yves
68500, ISSENHEIM (FR)**

(74) Mandataire: **Caillet, Isabelle et al
Casalonga & Partners
Bayerstrasse 71-73
80335 München (DE)**

(56) Documents cités:
**GB-A- 697 101     GB-A- 762 521
US-A- 5 120 695**

• **MOLIERE M ET AL: "EGT EXPERIENCE WITH GAS TURBINES BURNING ASH-FORMING FUELS" TECHNICAL REVIEW GEC ALSTHOM, GEC ALSTHOM, PARIS, FR, no. 11, 1 janvier 1993 (1993-01-01), pages 47-61, XP000369823 ISSN: 1148-2893**
• **WANG C-B ET AL: "Low temperature complete combustion of methane over titania-modified alumina-supported palladium" FUEL, IPC SCIENCE AND TECHNOLOGY PRESS, GUILDFORD, GB, vol. 81, no. 14, 1 septembre 2002 (2002-09-01), pages 1883-1887, XP004378476 ISSN: 0016-2361**

**Description**

La présente invention concerne un procédé permettant de réduire simultanément la corrosion à haute température et la formation de dépôts encrassants au sein d'équipements thermiques destinés à la production de chaleur, d'énergie mécanique ou électrique, par exemple les turbines à gaz, les moteurs diesel, les chaudières, les fours, les incinérateurs, les réacteurs d'avion, etc.

Dans ce qui suit, les turbines à gaz sont prises comme équipement thermique de référence et la terminologie suivante est adoptée :

- on appelle « fluide de combustion » tout fluide liquide ou gazeux qui est introduit dans le foyer de l'équipement thermique, catégorie qui inclut : (i) les combustibles liquides ou gazeux et, par extension, les combustibles mis en oeuvre sous forme de particules, tels que le charbon pulvérisé ou la sciure de bois, qui peuvent être injectés par un effet de pression dans les foyers et dont la physicochimie de la combustion est similaire à celle de combustibles fluides; (ii) le comburant (ou air de combustion) et (iii) certains fluides auxiliaires tels que : l'air d'atomisation, utilisé pour pulvériser le combustible liquide dans le foyer, un fluide éventuellement utilisé pour introduire un additif de la combustion, l'eau ou la vapeur d'eau utilisées éventuellement pour obtenir des effets particuliers tels qu'une réduction des émissions de $NO_X$ (« vapeur ou eau de déNO$_x$ ») ou une augmentation de puissance de la turbine ;
- on appelle « température de flamme » d'une turbine à gaz, non pas la température qui règne dans les flammes mais celle des gaz de combustion à leur entrée dans la turbine de détente ; il s'agit d'un paramètre de conception particulièrement important des turbines à gaz car elle en détermine le rendement maximal ;
- les « pièces chaudes » d'un équipement thermique sont les composants placés dans la veine des gaz chauds et comprennent notamment : les parois du foyer et de ces composants, les conduits de gaz de combustion et, selon le type d'équipement : la turbine de détente, les cylindres et pistons, les tubes et parois des échangeurs etc. Par exemple, dans les turbines à gaz de troisième génération, dont la température de flamme peut atteindre 1400°C, les pièces les plus chaudes sont les composants du système de combustion et de la turbine de détente et principalement les pièces du premier étage : aubes fixes (« directrices ») et mobiles (ailettes). Les limites de la métallurgie imposent que ces composants soient refroidis intérieurement de sorte que leur température de peau (c'est-à-dire la température de leurs parois) soit inférieure à celle des gaz de combustion. D'une façon générale, les températures auxquelles les parois des pièces chaudes sont exposées dépendent de nombreux facteurs, parmi lesquels : le type d'équipement, sa conception (types de matériaux; existence ou non de refroidissements internes et de barrières thermiques superficielles) et son régime de fonctionnement. Ce niveau de température peut être considéré comme compris entre 800 et 950°C ;
- des « traces » désignent des concentrations résiduelles de certains éléments introduits dans la chambre de combustion ;
- les « métaux corrosifs » comprennent, dans le présent contexte, les métaux alcalins (en particulier : Na et K) et le plomb, dont les cendres induisent, comme effet primaire, des corrosions à haute température des alliages métalliques; leurs cendres et leurs dépôts seront également qualifiés de « corrosifs » ;
- les « métaux encrassants » (« Me ») comprennent essentiellement : les métaux alcalino-terreux (en particulier : Ca et Mg) et certains métaux de transition (en particulier : Cu, Ni, Zn), dont les cendres tendent à se déposer sur les pièces chaudes et à provoquer, comme effet primaire, des phénomènes d'encrassement, c'est-à-dire l'apparition et la croissance progressive de couches de dépôts durs et adhérents sur les pièces chaudes ; leurs cendres et leurs dépôts seront également qualifiés d'« encrassants » ; le plomb appartient aussi à la catégorie des métaux encrassants ;
- les « métaux délétères » comprennent les métaux corrosifs et les métaux encrassants ; leurs cendres et leurs dépôts seront également qualifiés de « délétères ».

Dans un équipement thermique, les fluides de combustion contiennent souvent des traces de certains métaux délétères qui menacent, selon le cas, l'intégrité métallurgique de ces équipements (cas des métaux corrosifs), leurs performances énergétiques (cas des métaux encrassants) ou les deux à la fois (en présence des deux types de métaux). Notamment, il convient de souligner que le bilan de matière des métaux délétères doit être considéré au sein des gaz de combustion où sont situées les pièces chaudes ou bien, ce qui est équivalent, au niveau du foyer où se réunissent les fluides de combustion potentiellement contaminés.

Parmi les métaux corrosifs figurent les métaux alcalins : des traces de sodium et de potassium sont fréquemment véhiculées par les fluides de combustion, surtout par le combustible liquide ou par l'« eau de déNO$_x$ », le plus souvent sous forme de chlorures ; dans les flammes, ces chlorures réagissent avec le soufre apporté par le combustible ou l'air ambiant, pour former les sulfates alcalins correspondants : $Na_2SO_4$ et $K_2SO_4$. Les sulfates alcalins constituent, à l'état fondu, des milieux électrolytiques très agressifs vis-à-vis des alliages métalliques et sont susceptibles de corroder les portions de pièces chaudes sur lesquelles ils viennent se déposer et demeurer suffisamment longtemps. Le point de

fusion (« Tf ») de $Na_2SO_4$ pur est par exemple de 884°C, température qui, comme il est indiqué par la suite, peut fortement diminuer en présence d'autres sels métalliques. De plus, il convient de noter que les films liquides de sulfates alcalins sont relativement fluides et tendent donc à fluer le long des parois sous l'effet des courants gazeux qui balaient en permanence les pièces chaudes ; ceci réduit leur chance de se fixer durablement sur des portions métalliques définies, de sorte que les cas de corrosion à haute température sont moins fréquents que si ces films venaient à se fixer de façon stationnaire sur ces mêmes portions métalliques. Par ailleurs, les sulfates alcalins fondus ont des pressions de vapeur non négligeables à haute température, de sorte que leur dépôt sur les pièces les plus chaudes (par exemple celles du premier étage d'une turbine à gaz de technologie avancée) peut être réduite par ce phénomène de vaporisation. Toutefois, dans ce cas, le dépôt des sulfates se forme sur d'autres pièces, situées plus en aval et moins chaudes.

Les formes de corrosion induites par les sulfates alcalins sont appelées corrosions à haute température « de type I ou II » selon leur mécanisme : dans une corrosion de type I, l'attaque du métal est uniforme, sans formation de piqûres, tandis que la corrosion de type II se caractérise par l'apparition de piqûres superficielles et par l'existence d'une « période d'induction » avant la manifestation de la corrosion. Cette période d'induction correspond à la durée d'incubation des piqûres qui est d'autant moins longue que le milieu est plus agressif et la résistance intrinsèque de l'alliage, liée notamment à sa teneur en chrome, est plus faible.

Outre les facteurs primaires que constituent la température et la teneur en métaux alcalins dans les gaz de combustion, d'autres paramètres interviennent dans les cinétiques des corrosions de type I ou II. Deux facteurs sont notamment importants, ainsi que la demanderesse l'a observé :

- la concentration en $SO_X$ (c'est à dire en $SO_2$ et $SO_3$) dans les gaz de combustion, dont l'augmentation accélère la corrosion et raccourcit notamment la période d'induction qui précède l'apparition de piqûres dans les corrosions de type II ;
- le type d'alliage ; en effet, deux types principaux de superalliages sont utilisés dans la construction des turbines à gaz : d'une part, les alliages dits « chromine-formers », mis au point dans les années 1960-1970 et utilisés typiquement sous forme d'alliages poly-cristallins dans les turbines de première et deuxième générations ; ces alliages chromine-formers développent en surface des couches de passivation riches en oxyde de chrome ($Cr_2O_3$) qui protègent, dans certaines limites, le substrat des agressions par les sulfates fondus ; d'autre part, les alliages dits « alumine-formers » qui ont été mis au point plus récemment sont utilisés de plus en plus souvent sous forme d'alliages monocristallins dans les turbines à gaz de troisième génération qui ont des températures de flamme très élevées ; ces alliages alumine-formers développent des couches superficielles riches en alumine qui leur confèrent, par rapport aux alliages chromine-formers, des propriétés réfractaires et mécaniques à chaud renforcées mais ils disposent d'une résistance bien moindre vis-à-vis de la corrosion à haute température.

S'agissant de l'effet d'encrassement, plusieurs types de métaux ont des effets à des degrés divers :

- les traces de calcium et de magnésium génèrent des cendres de sulfate de calcium (anhydrite: $CaSO_4$) et de magnésium ($MgSO_4$) ainsi que de l'oxyde de magnésium (MgO) et proviennent en général du combustible ou de « l'eau de $DéNO_X$ »; $CaSO_4$ a un effet encrassant très marqué ;
- les traces de métaux de transition, qui génèrent des cendres à base d'oxydes et d'oxysulfates, peuvent être apportées par de l'eau contenue dans l'un des fluides de combustion. Par exemple, de l'humidité contenue dans l'air du comburant ou dans l'air d'atomisation a pu être en contact, en amont du foyer, avec une structure en acier au carbone ou galvanisé ou bien avec un échangeur en laiton ou en cupro-nickel et se charger en zinc, cuivre ou nickel.

Enfin, le plomb occupe une position particulière parmi les métaux délétères, les cendres chargées en plomb pouvant avoir un double rôle encrassant et corrosif. Les traces de plomb que l'on peut rencontrer, quoique assez rarement, dans certains combustibles pétroliers (naphtas, gazoles) proviennent généralement d'une contamination accidentelle par des essences plombées. Selon les conditions (teneurs en soufre du combustible, température, présence ou non de métaux alcalins, etc), les cendres plombées peuvent être fusibles (cas le plus général) ou réfractaires :

- le sulfate de plomb pur ($PbSO_4$) a un point de fusion élevé ($T_f$ : 1075°C) et est susceptible, lorsqu'il est présent en assez forte concentration, de générer des dépôts encrassants ;
- néanmoins, selon la température et la teneur en soufre du combustible, $PbSO_4$ subit le plus souvent un processus de désulfatation pour former une série d'oxysulfates aux points de fusion décroissants : (i) $PbO-PbSO_4$ ($T_f$ : 965°C), (ii) $2PbO-PbSO_4$ ($T_f$ : 932°C), (iii) $4PbO-PbSO_4$ ($T_f$ : 800°C) et, in fine, (iv) PbO ($T_f$ : 885°C). Ces phases sont connues pour leur très forte corrosivité à haute température.

Le plomb est donc un métal à la fois très corrosif et potentiellement encrassant.

La fraction des cendres issues des métaux encrassants et qui se dépose sur les pièces chaudes, subit un phénomène de frittage par séjour prolongé à haute température : les dépôts tendent ainsi à devenir à la fois durs et adhérents, ce qui, joint à leur insolubilité dans l'eau (voire leur tendance éventuelle à s'agglomérer et à durcir au contact de l'eau) rend leur élimination très difficile et justifie leur qualificatif d'encrassants. Leur effet principal est la dégradation des performances de l'équipement thermique, dégradation progressive au fur et à mesure de leur accumulation, et qui se traduit par : (i) une diminution des coefficients d'échanges thermiques, (ii) l'altération de l'aérodynamique des écoulements gazeux et (iii) dans les cas extrêmes, une réduction des sections de passage des gaz chauds. Un démontage partiel de l'équipement thermique peut alors s'avérer nécessaire pour restaurer manuellement son état de propreté et ses performances.

Dans la réalité, les traces de métaux corrosifs et de métaux encrassants sont le plus souvent présentes simultanément et des effets néfastes secondaires peuvent résulter de leur combinaison. D'une part, l'accrochage de particules d'anhydrite $CaSO_4$ aux parois est facilitée par des traces, même infimes, de sulfates alcalins fondus. D'autre part, les sulfates issus des métaux encrassants (« Me ») se combinent souvent à ceux des métaux alcalins (« Ma ») pour donner des sulfates doubles du type : $MeSO_4$ - $Ma_2SO_4$, voire triples du type : $MeSO_4$ - $Ma_2SO_4$ - $Ma'_2SO_4$, lesquels seront appelés dans ce qui suit « sels complexes ». Ces sels complexes ont souvent des températures de fusion commençante (ou températures de solidus) inférieures à la température de paroi des pièces chaudes, ce qui permet leur adhésion à celles-ci.

Par exemple :

- $CaSO_4$ ($T_f \sim 1450°C$) forme avec $Na_2SO_4$ et $K_2SO_4$ des sels complexes du type $(Na,K,Ca)(SO_4)$ dont trois eutectiques binaires et ternaire de compositions respectives :

  50% $Na_2SO_4$ - 50% $CaSO_4$ ($T_f$ : 916°C) ;
  62% $K_2SO_4$ - 38% $CaSO_4$ ($T_f$ : 867°C) et
  31% $Na_2SO_4$ - 29% $K_2SO_4$ - 40% $CaSO_4$ (Tf $\sim$ 800°C);

- $MgSO_4$ forme de même trois eutectiques :

  56% $Na_2SO_4$ - 44% $MgSO_4$ ($T_f$ : 662°C),
  72,5% $Na_2SO_4$ - 27.5% $MgSO_4$ ($T_f$ : 750°C),
  13% $Na_2SO_4$ - 55% $K_2SO_4$ - 32% $MgSO_4$ ($T_f$ : 670°C);

- $PbSO_4$ forme avec $Na_2SO_4$ l'eutectique :

  53% $Na_2SO_4$ - 47% $PbSO_4$ ($T_f$ : 730°C);

- $ZnSO_4$ forme l'eutectique :

  45% $Na_2SO_4$ - 55% $ZnSO_4$ ($T_f$ : 472°C);

- $NiSO_4$ forme l'eutectique :

  62% $Na_2SO_4$ - 38% $NiSO_4$ ($T_f$ : 665°C) et

- $CuSO_4$ forme les eutectiques :

  53% $Na_2SO_4$ - 47% $CuSO_4$ ($T_f$ : 537°C) et
  55% $K_2SO_4$ - 45% $CuSO_4$ ($T_f$ : 460°C).

Il convient de noter que, bien que les sulfates de magnésium, de plomb et de métaux de transition (Cu, Zn, Ni), aient des stabilités thermiques limitées et se décomposent en oxysulfates ou oxydes à haute température, ils sont stabilisés lorsqu'ils se trouvent combinés à des sulfates alcalins dans les sels complexes qui précèdent. Par ailleurs, ces combinaisons réduisent la pression de vapeur et par conséquent la vaporisation des sulfates alcalins et tendent donc à accentuer leur effet corrosif. Enfin, alors que les sulfates alcalins fondus sont très fluides à l'état pur et tendent à fluer le long des parois chaudes, ces sels complexes sont en général visqueux, voire ont une consistance « pâteuse ». Par conséquent, non seulement ils se fixent plus facilement aux parois métalliques et participent aux processus d'encrassement et de corrosion, mais aussi ils jouent à leur tour le rôle de « colle » vis-à-vis de diverses particules liquides ou solides venant à percuter ces parois. Ceci conduit à des accumulations locales de scories et à l'aggravation des effets d'encrassement et/ou de corrosion. En résumé, il existe des effets néfastes secondaires que l'on peut qualifier de « synergétiques » et qui résultent des interactions physico-chimiques entre les cendres des différents métaux délétères : tandis que les sulfates alcalins jouent le rôle de fondants vis-à-vis des particules chargées en métaux encrassants, les sulfates de ces derniers jouent inversement le rôle « d'épaississants » pour les premiers. Le plomb peut jouer à lui seul ces deux rôles ou agir en association avec les autres métaux délétères.

Cette analyse approfondie des liens étroits entre les processus d'encrassement et de corrosion à haute température montre que l'on ne doit pas chercher à remédier indépendamment aux deux effets mais que l'on doit au contraire s'attaquer simultanément aux causes des deux problèmes, ce qui constitue une approche nouvelle du maintien de l'intégrité et des performances des équipements thermiques.

Dans ce qui suit, on parlera, à des fins de simplification, de « cendres oxy-sulfatées » pour désigner l'ensemble des composés : sulfates, oxysulfates, sels complexes et oxydes de métaux délétères présents en sortie de foyer.

Parmi les inconvénients qui viennent d'être décrits, les corrosions à haute température sont les effets les plus redoutables car elles peuvent engendrer des ruptures de pièces chaudes qui non seulement interviennent souvent de façon inopinée mais peuvent aussi engendrer, dans le cas de machines tournantes, des destructions en cascade entraînant des réparations très coûteuses et de longues immobilisations des équipements.

Les contaminations au plomb sont rares mais peuvent être massives et il n'existe pas à l'heure actuelle de méthode d'inhibition de la corrosion à haute température induite par le plomb.

Les autres métaux délétères sont pratiquement toujours présents à l'état de traces et leur absence rigoureuse est très difficile à assurer dans des conditions d'exploitation industrielles des équipements thermiques. Par exemple, même si l'exploitant peut approvisionner, avec un certain surcoût, un gazole exempt de contamination métallique, notamment sodique, ce niveau de pureté ne peut être garanti lors des phases ultérieures de transport (problématique de la propreté des pipe-lines, wagons ou citernes) et peut également se dégrader dans les cuves de stockage de la centrale par l'effet de « respiration » des cuves (entrées d'air par suite des variations de niveau et des cycles de température diurne-nocturne).

D'un autre point de vue, les biocombustibles constitués soit par la biomasse primaire (bois, paille, résidus de production agricoles, huiles végétales obtenues par trituration de graines d'oléagineux, etc) soit par la biomasse secondaire (éthanol, esters méthyliques d'huiles végétales EMHV, etc) et qui sont appelés à se développer comme substituts ou compléments des énergies fossiles dans des équipements thermiques divers, sont très souvent contaminés par des métaux. Par exemple, dans le cas de la biomasse primaire et des EMHV, on trouve principalement du calcium comme métal encrassant et du potassium comme métal corrosif. Même si les biocombustibles sont très peu soufrés de par leur origine végétale, leurs teneurs en soufre (de l'ordre de quelques mg/kg) qui s'ajoutent à celles, résiduelles, apportées par l'air ambiant, sont en général suffisantes pour produire des cendres oxy-sulfatées dans les flammes. Par conséquent la combustion de biomasse a potentiellement, sur les équipements thermiques, des effets délétères semblables dans leur nature à ceux des combustibles fossiles, mais avec des effets potentiellement plus intenses du fait des plus fortes contaminations métalliques originelles.

Il existe donc une antinomie croissante entre d'une part le besoin - dicté par la conception des équipements thermiques les plus performants dont les turbines à gaz modernes - d'approvisionner des combustibles très purs et donc coûteux et d'autre part la nécessité de maintenir des coûts d'exploitation à un niveau soutenable.

Par ailleurs, du fait des niveaux de plus en plus faibles de contamination métallique requis par les turbines à gaz de nouvelle génération en raison de températures de flamme croissantes, les problèmes décrits ci dessus peuvent affecter non seulement les unités brûlant des combustibles liquides mais aussi celles brûlant des gaz commerciaux très purs mais installées dans des atmosphères marines ou industrielles, c'est-à-dire dans des environnements contaminés par des sels, sachant que les techniques actuellement disponibles pour éliminer ces sels de l'air sont très coûteuses et leur efficacité délicate à contrôler.

S'agissant de la corrosion par les métaux alcalins et plus particulièrement par le sodium, les brevets FR 1 207 857 de Continental Oil (1959) et US 3 018 172 de Tillman (1962) d'une part enseignent l'effet bénéfique apporté par des composés de l'aluminium

- qualifié dans ce qui suit de « métal actif » - sur des durées d'essai de 50 heures et d'autre part révèlent des dosages Al/Na compris entre 2 et 6 en masse. Toutefois, la demanderesse a observé qu'une telle méthode de protection est mise en défaut dans un grand nombre de situations :

(a)- soit pour des durées nettement supérieures à 50 heures, correspondant de fait à des conditions industrielles de fonctionnement des équipements. Par exemple, dans l'un des essais effectués par la demanderesse, des éprouvettes en superalliage GTD111 de base nickel, ont été maintenues en contact prolongé à 900°C avec un bain de sulfate de sodium additionné d'alumine avec un rapport massique Al/Na de 2,5, et ont subi au bout de 200 heures une corrosion par piqûre intense. Cet aspect n'a pu être observé par Tillman dont les tests n'ont pas dépassé 50 heures, durée inférieure à la période d'induction des piqûres qui prévaut dans ces conditions ;
(b)- soit en présence de métaux encrassants tendant à former des « sulfates complexes » avec les sulfates alcalins, selon les mécanismes décrits précédemment. Par exemple, dans un autre essai effectué par la demanderesse, le mélange eutectique 50% $Na_2SO_4$ - 50% $CaSO_4$ ($T_f$ : 916°C) a conduit, à une température de 950°C, à une piqûration des éprouvettes de GTD111 plus rapide qu'en absence de calcium, pour un même dosage Al/Na ; on a observé par ailleurs la formation à chaud d'un couche très visqueuse de l'eutectique autour de la pièce, qui a laissé, après refroidissement, une gangue très adhérente ;

(c)- soit en présence de fortes teneurs en $SO_X$ dans les gaz de combustion (liées à de fortes teneurs en soufre du combustible). Dans une autre série d'essais effectués par la demanderesse, un dosage massique Al/Na de 3 qui avait assuré une protection efficace du superalliage GTD111 à 900°C et sur une durée de 400 heures, pour une teneur en $SO_X$ de 50 ppm, a laissé développer des piqûres au bout d'environ 300 heures lorsque cette teneur a été ajustée à 200 ppm ;

(d)- soit, enfin, dans le cas de superalliages alumine-former.

Par exemple, la demanderesse a observé qu'un dosage de Al/Na de 3 qui protège correctement l'alliage GTD111 (contenant 14% Cr et 3% Al), à 900°C, sur une durée de 400 heures et en présence de 50 ppm de soufre, donne de mauvais résultats avec l'alliage alumine-former « N5 » (contenant 7,6% Cr et 6% Al) dans les mêmes conditions.

La demanderesse a par ailleurs observé que le sulfate de sodium utilisé durant les tests se retrouve inaltéré en fin d'essai, ce qui indique l'absence de réaction entre le sulfate et l'alumine utilisée ou le sel d'aluminium utilisé (qui libère de l'alumine à chaud).

En résumé, les travaux réalisés par la demanderesse confirment bien l'effet bénéfique de l'aluminium dans la corrosion à haute température par les sulfates alcalins. Toutefois, ils révèlent aussi qu'une protection de longue durée est très difficile à obtenir. En particulier lorsqu'on aggrave les conditions corrosives de l'essai (en utilisant soit une teneur en $SO_X$ plus élevée, soit un milieu corrosif contenant un métal encrassant) ou bien lorsqu'on utilise un superalliage moins résistant, le dosage de l'aluminium doit être augmenté et il est difficile de définir un dosage qui soit protecteur sur une longue durée, sachant que les essais de corrosion à réaliser deviennent alors très longs (et coûteux) du fait d'un allongement de la période d'induction des piqûres. Les résultats de ces travaux suggèrent aussi que la rémanence du risque de corrosion par piqûre peut être liée à l'absence de réaction chimique entre l'aluminium et le sulfate alcalin, lequel conserve donc ses propriétés corrosives.

Enfin, il n'existe pas à l'heure actuelle de méthode de modification des cendres permettant de supprimer les effets encrassants des métaux alcalins et de transition.

Le document GB 697 101 concerne un procédé de combustion d'un combustible et mentionne notamment les problèmes de corrosion par le vanadium ainsi que l'utilisation de l'oxyde de titane, de l'alumine et de la silice.

Le document US 5 120 695 concerne un catalyseur pour supprimer les polluants présents dans des gaz de rejet. Le catalyseur comprend un support en nid d'abeille avec une portion amont comportant un catalyseur de réduction des oxydes d'azote, et une portion avale comportant un catalyseur d'oxydation.

Le document « Low temperature complete combustion of methane over titania-modified alumina-supported palladium » (FUEL, IPC SCIENCE AND TECHNOLOGY PRESS, GUILDFORD, GB, vol. 81, n° 14, 1 septembre 2002, pages 1883-1887) concerne un catalyseur pour la combustion du méthane.

Par conséquent, il est souhaitable de disposer d'un procédé qui protège les pièces chaudes des équipements thermiques (y compris les pièces en alliages alumine-former) contre les phénomènes de corrosion et d'encrassement induits par les métaux délétères et en présence d'oxydes de soufre en quantité variable dans les fluides de combustion desdits équipement thermiques, ceci pour de longues durées de fonctionnement et sans que l'exploitant ait à appliquer des traitements de purification contraignants et coûteux aux fluides de combustion.

La demanderesse a découvert qu'on peut atteindre cet objectif en adjoignant au premier métal actif que constitue l'aluminium, un « second métal actif » qui est le titane. Ces nouvelles formulations d'additifs à base de composés d'aluminium et de titane seront appelées, dans la suite de la description, « additifs aluminium-titane » ou « additifs mixtes » à des fins de simplification.

Dans la suite de la description, on adoptera les conventions suivantes :

- les concentrations en métaux délétères (métaux alcalins, alcalino-terreux et de transition ; plomb) et en métaux actifs (Al et Ti) présentes au niveau du foyer ou, ce qui est équivalent, dans les gaz de combustion, seront exprimées sous forme massique (par exemple, en mg/kg) et rapportées au débit de combustible. On définit ainsi pour tout métal X, sa « concentration nette » [X] comme la somme des concentrations de ce métal sur l'ensemble des fluides de combustion, concentrations pondérées par le débit massique de chaque fluide porteur et rapportées au débit de combustible. On considère par exemple une turbine à gaz dans laquelle le débit massique d'air ($Q_a$) est 40 fois supérieur à celui du combustible ($Q_f$) et dans laquelle on opère une injection d'« eau de déNO$_X$ » avec un débit massique d'eau ($Q_w$) égal à 0,5 fois celui du combustible; si la concentration en sodium est : $[Na]_f$ = 1 mg/kg dans le combustible, $[Na]_a$ = 0,01 mg/kg dans l'air et $[Na]_w$ = 0,02 mg/kg dans « l'eau de déNO$_X$ », alors la « concentration

nette » $[Na]_t$ qui est la concentration en sodium dans l'ensemble des fluides alimentant la chambre de combustion de sodium (ou, ce qui revient au même, dans les gaz de combustion), est par définition :

$$[Na]_t = \frac{[Na]_a * Q_a + [Na]_f * Q_f + [Na]_w * Q_w}{Q_a + Q_f + Q_w}$$

En pratique, on considère souvent la « concentration nette rapportée au combustible », notée par l'indice « t/f » (ici : « $[Na]_{t/f}$ »), dont l'expression est :

$$[Na]_{t/f} = \frac{[Na]_t * (Q_a + Q_f + Q_w)}{Q_f} = [Na]_f + [Na]_a * \frac{Q_a}{Q_f} + [Na]_w * \frac{Q_w}{Q_f}$$

La « concentration nette rapportée au combustible » est souvent utilisée en pratique car elle apparaît comme la somme de la concentration dans le combustible (terme $[Na]_f$), qui est en général la plus forte, et des concentrations dans les autres fluides (termes $[Na]_a$ et $[Na]_w$) qui sont pondérées respectivement des rapports $(Q_a/Q_f)$ et $(Q_w/Q_f)$ et sont très souvent mineures. Par ailleurs, les spécifications de pureté des constructeurs font le plus souvent appel aux concentrations nettes rapportées au combustible.

Cependant, comme la concentration nette est proportionnelle à la concentration nette rapportée au combustible, il est indifférent, lorsqu'on exprime un rapport de concentrations de deux métaux dans des conditions de marche identiques de l'appareil thermique, de prendre le rapport des concentrations nettes ou le rapport des concentrations nettes rapportées au combustible.

Dans l'exemple numérique considéré, la « concentration nette rapportée au combustible », vaut :

$$[Na]_{t/f} = 1 + 0{,}01 * 40 + 0{,}02 * 0{,}5 = 1{,}41 \text{ mg/kg}$$

La « concentration nette » est, elle, 41,5 fois plus faible soit 0,034 mg/kg, soit encore 34 $\mu$g/kg $((Q_a+Q_f+Q_w)/Q_f = 41{,}5)$. S'agissant des métaux actifs (Al et Ti), on notera qu'il est naturel de rapporter aussi leurs concentrations au débit de combustible car ils sont le plus souvent introduits dans ce dernier.

- « Y » désignera le maximum entre les quatre valeurs suivantes faisant intervenir les concentrations massiques des métaux délétères : [Na]+[K]; 1,5*[Ca]+0,5*[Mg]; [Pb]; 0,25*([Ni]+[Zn]+[Cu]), c'est-à-dire :
  Y = max{[Na]+[K]; 1,5*[Ca]+0,5*[Mg]; [Pb]; 0,25*([Ni]+[Zn]+[Cu])} On dira que la contamination est « à dominante corrosive » lorsque Y=[Na]+[K] ou lorsque Y=[Pb]. Inversement, on dira que la contamination est « à dominante encrassante » lorsque Y=1,5*[Ca]+0,5*[Mg] ou lorsque Y = 0,25*([Ni]+[Zn]+[Cu]) ;
- le dosage de l'additif mixte, définie par le « rapport de dosage » noté « R » est donné par l'expression :

$$(1) \qquad R = \frac{[Al] + [Ti]}{Y}$$

- on définit enfin les « fractions massiques relatives » (ou plus simplement « fractions massiques ») de Al et Ti par les rapports :

$$(2) \qquad a = \frac{[Al]}{[Al] + [Ti]} \qquad et \qquad t = \frac{[Ti]}{[Al] + [Ti]}$$

On a donc :

$$(3) \qquad a + t = 1.$$

On notera que ces fractions massiques sont, du fait de la définition de [Al] et [Ti], définies au niveau du foyer ou bien, ce qui revient au même, dans les gaz de combustion. Toutefois, lorsque les fluides de combustion autres que l'additif, ne contiennent pas d'aluminium et de titane - ce qui est de loin le cas le plus fréquent - les fractions massiques « a » et « t » représentent aussi les fractions de Al et Ti présentes dans l'additif.

La demanderesse a établi que les additifs « additifs aluminium-titane » assurent, moyennant des conditions de dosage judicieuses, à la fois une forte réduction de l'encrassement et une protection anticorrosion efficace et de longue durée même dans le cas d'alliages alumine-formers, en présence de sels complexes de métaux délétères et en présence de fortes concentrations en $SO_X$. Ils satisfont par ailleurs aux critères industriels de coût modéré, de non toxicité et de respect de l'environnement.

Au plan chimique, il a été observé que les cendres ainsi modifiées sont principalement :

- pour les cendres modifiées contenant du calcium : $CaTiO_3$ (pérovskite; $T_f$ = 1972°C) et $CaAl_4O_7$ ($T_f$ = 1765°C) comme phases majeures; $CaAl_{12}O_{19}$ ($T_f$ = 1875°C) comme phase présente en quantité moyenne; $4CaO\text{-}3Al_2O_3\text{-}SO_3$ ($T_f$ = 1350°C) comme phase mineure ;
- pour les cendres modifiées contenant du magnésium : $MgTiO_3$ ($T_f$ = 1664°C) ; $MgAl_2O_4$ ($T_f$ = 2105°C) ;
- pour les cendres modifiées contenant du plomb : $PbTiO_3$ ($T_f$ = 1294°C), $PbAl_{12}O_{19}$ ($T_f$ > 1000°C) ;
- pour les phases modifiées à base de nickel : $NiAl_2O_4$ ($T_f$ = 2100°C); solutions solides ($NiO\text{-}Al_2O_3$); $NiTiO_3$ ($T_f$ = 1610°C) ;
- pour les cendres modifiées contenant du cuivre : $2CuO\text{-}Al_2O_3$ ($T_f$ = 1260°C) et $CuTi$
- pour les cendres modifiées contenant du zinc : $ZnTiO_3$, $ZnO\text{-}Al_2O_3$ ($Tf$ ~ 1950°C).

A des fins de simplification, ces différents sels, solutions solides et oxydes doubles seront désignés respectivement par « aluminates » et « titanates ».

Au plan des mécanismes mis en jeu dans la réduction des dépôts encrassants, les travaux de la demanderesse montrent l'existence de plusieurs processus :

- d'abord, les particules de l'additif mixte fixent par interception et absorption les cendres oxy-sulfatées des métaux délétères, selon un processus de « capture en vol » qui se déroule d'abord dans les flammes (c'est-à-dire dans une plage de température de l'ordre de 1400 à 2100°C) puis dans la zone « post-flamme », c'est-à-dire dans la zone comprise entre les flammes et le jeu des pièces chaudes situées immédiatement en aval du système de combustion (c'est-à-dire dans une plage de température de l'ordre de 1400 à 1000°C), ces deux plages de température étant fournies à titre indicatif ;
- ensuite, celles de ces particules qui se déposent à la surface des pièces chaudes, sont le siège des processus suivants :

  - l'additif mixte libère de l'oxyde de titane $TiO_2$ et de l'oxyde d'aluminium $Al_2O_3$ ;
  - les deux oxydes $Al_2O_3$ et $TiO_2$ sont actifs vis-à-vis des cendres oxy-sulfatées des métaux encrassants et du plomb qu'ils décomposent pour former respectivement les aluminates et titanates cités plus haut, composés tous très réfractaires. L'activité remarquable de chacun de ces oxydes permettrait d'envisager l'utilisation soit de $Al_2O_3$ pur soit de $TiO_2$ pur pour la fonction anti-encrassement; néanmoins l'utilisation simultanée des deux oxydes est intéressante du fait de la formation partielle de titanate d'aluminium $TiAl_2O_5$ : cet oxyde mixte, caractérisé par un rapport stoechiométrie massique Ti/(Ti+Al) de 0,47 (voisin de 0,5), se forme à très haute température et n'est stable qu'au dessus de 1100°C; il a des propriétés antifriction qui tendent à réduire le dépôt des particules de cendres encrassantes; enfin le titanate d'aluminium est aisément décomposé par les espèces oxysulfatées des métaux encrassants selon des réactions du type :

    $$2CaSO_4 + TiAl_2O_5 \rightarrow CaTiO_3 + CaAl_2O_4 +$$

    $SO_3$ Pour favoriser sa formation dans le cas de contaminations encrassantes, on aura ainsi intérêt à prendre une fraction massique de Ti (c'est-à-dire [Ti]/([Ti]+[A1])) voisine de 0,5.
  - $Al_2O_3$ ne peut pas décomposer les sulfates alcalins car les aluminates alcalins (« $MaAlO_2$ ») susceptibles de se former, sont instables dans les conditions de température, de pressions partielles de $SO_X$ et de $H_2O$ prévalant au voisinage des parois des pièces chaudes. L'action inhibitrice de $Al_2O_3$ ne réside donc pas dans la décomposition des sulfates alcalins; une étude plus poussée réalisée par la demanderesse montre que son rôle, indirect, réside dans sa capacité à détruire les germes d'eutectiques corrosifs à la surface du matériau : en effet, l'attaque par $Na_2SO_4$, en présence de $SO_2$ et $O_2$, de superalliages à base de nickel démarre avec la formation d'un eutectique fusible et corrosif, tel que celui à 62% $Na_2SO_4$ - 38% $NiSO_4$ ($T_f$: 670°C); l'ajout de $Al_2O_3$ à la surface de l'alliage bloque l'apparition de cet eutectique car, comme l'a vérifié la demanderesse, $Al_2O_3$ décompose les germes de $NiSO_4$ pour former le spinelle $NiAl_2O_4$ qui est très stable et ne forme pas d'eutectique corrosif.

- En revanche $TiO_2$ a la capacité de réagir avec les sulfates alcalins corrosifs qu'il décompose en titanates (tels que : « $Ma_2TiO_3$ », « $Ma_2Ti_3O_7$ ») ce qui constitue une contribution essentielle du titane dans le processus d'inhibition de la corrosion. Toutefois, le composé $TiAl_2O_5$ est moins réactif que $TiO_2$ vis-à-vis des sulfates alcalins et il convient donc d'éviter, dans le cas d'une contamination à dominante corrosive, une valeur de la fraction massique de titane proche de 0,5 ; une valeur de t voisine de 0,2 est préférée dans ce cas.

L'efficacité de l'additif mixte s'explique donc par l'action couplée des oxydes $TiO_2$ et $Al_2O_3$, le premier « neutralisant » très efficacement les sulfates alcalins, le dernier détruisant les germes superficiels de corrosion à haute température et les deux étant actifs vis-à-vis des phases oxy-sulfatées du calcium, du magnésium du plomb et des métaux de transition.

Par ailleurs, la demanderesse a observé que $TiO_2$ décompose non seulement les cendres oxy-sulfatées selon le mécanisme qui précède mais aussi les chlorures et les carbonates des métaux délétères avec formation de titanates. Ceci présente un intérêt particulier lorsque la teneur en soufre est insuffisante pour former quantitativement les sulfates des métaux délétères dans les chambres de combustion, ce qui peut survenir dans le cas de combustibles non soufrés tels que des gaz naturels très purs et sur des sites exempts de pollution soufrée tels que les zones rurales. Ainsi, même en absence de soufre ou en présence de teneurs en soufre extrêmement faibles, les cendres chlorurées ou carbonatées qui se forment alors, selon le cas, sont décomposées par $TiO_2$ et l'objectif de modification des cendres est également atteint.

La demanderesse a enfin établi que, contrairement aux cendres oxysulfatées, les cendres à base d'aluminium et de titane produites par les additifs mixtes ont des propriétés physico-chimiques particulièrement favorables :

- elles se présentent sous forme de particules de granulométrie extrêmement fine et sont par ailleurs très friables ;
- elles ne sont pas abrasives du fait que les cristallites de $TiO_2$ et $Al_2O_3$ qui se forment « en vol » à partir de l'additif mixte, sont de tailles extrêmement réduites et très peu cristallisées, ceci en raison du temps très brefs qui s'écoule entre leur génération et leur impact sur les pièces chaudes ;
- leur dépôt sur les pièces métalliques est limitée notamment du fait de la formation de titanate d'aluminium déjà évoqué; elle est par ailleurs réversible : les particules déposées n'adhèrent pas aux surfaces et l'épaisseur du dépôt atteint une valeur stationnaire faible indiquant un phénomène de déplacement des particules de cendres déjà déposées par de nouvelles ;
- elles peuvent être éliminées, si nécessaire, par des traitements mécaniques doux ou par des lavages à l'eau (qui agissent par effet d'entraînement et non par solubilisation) sachant que les cendres ainsi modifiées ne prennent pas en masse au contact de l'eau ; en comparaison, dans le cas d'une contamination calcique non traitée avec un inhibiteur mixte, les pièces chaudes se recouvriraient de dépôts durs d'anhydrite ($CaSO_4$) qui se transformerait, par hydratation au contact de l'eau, en hémi-hydrate de sulfate de calcium ($CaSO_4$-0,5 $H_2O$) ou en gypse ($CaSO_4$-2 $H_2O$), phases dures et non hydrosolubles.

Une telle méthode permet de réduire la formation de dépôts délétères dans les équipements thermiques, en modifiant la composition chimique des cendres durant la combustion, de façon à supprimer leur caractère corrosif et/ou encrassant. Ainsi, on remplace les cendres oxy-sulfatées des métaux délétères par de nouvelles phases cristallines réfractaires et non adhérentes, qui sont transportées sous forme de cendres volantes le long de la veine des gaz chauds et expulsées hors de l'appareil thermique. On notera que cette méthode, du fait qu'elle est mise en oeuvre au niveau du foyer, permet de traiter non seulement les métaux contenus dans le combustible mais aussi ceux véhiculés par les autres fluides de la combustion. Par ailleurs, les cendres modifiées sont non adhérentes à haute température, puisqu'elles sont solides et non pas liquides, même partiellement, ni même de consistance pâteuse ; en d'autres termes, les cendres modifiées sont réfractaires et présentent une température de solidus nettement supérieure aux températures de parois.

L'invention concerne un procédé de fonctionnement d'un équipement thermique alimenté par un ensemble de fluides comprenant un combustible et un comburant, dans lequel au moins un des fluides comprend au moins un métal appartenant à l'ensemble constitué par : le sodium, le potassium, le calcium, le magnésium, le plomb, le nickel, le cuivre et le zinc. En particulier, on alimente aussi ledit équipement thermique avec des composés à base d'aluminium et de titane, le rapport de dosage R, défini par l'expression ([Al]+[Ti])/[Y] dans laquelle [Y] représente le maximum des valeurs suivantes : ([Na]+[K]); (1,5*[Ca]+0,5*[Mg]); [Pb]; 0,5*([Zn]+[Cu]+[Ni]) et la notation générique [M] désigne la concentration massique du métal « M » dans l'ensemble des fluides alimentant la chambre de combustion, est supérieur ou égal à 2,5, et la fraction massique de titane [Ti]/([Al]+[Ti]), est (i) comprise entre 0,4 et 0,6 de préférence égale à 0,5, lorsque Y est égal à (1,5*[Ca]+0,5*[Mg]) ou à 0,5*([Zn]+[Ca]+[Ni], et (ii) comprise entre 0,1 et 0,3, de préférence égale à 0,2, lorsque Y est égal à ([Na]+[K]) ou à [Pb].

>

Le rapport de dosage R est, de préférence, : (i) compris entre 2,5 et 3,5, de préférence égal à 3, lorsque Y est égale à (1,5*[Ca]+0,5*[Mg]) ou à 0,5*([Zn]+[Cu]+[Ni]) ; (ii) compris entre 4 et 5, de préférence égal à 4,5, lorsque Y est égale à ([Na]+[K]) ou à [Pb], que l'équipement thermique ne comprend pas de pièce en superalliage alumine-former et que la teneur en $SO_X$ dans les produits de combustion ne dépasse pas 50 ppm en volume et (iii) compris entre 4,5 et 5,5, de préférence égal à 5, lorsque Y est égale à ([Na]+[K]) ou à [Pb] et que l'équipement thermique comprend une pièce en superalliage alumine-former ou que la teneur en $SO_X$ dans les produits de combustion excède 50 ppm en volume.

Autrement dit, lorsque la contamination est à dominante encrassante, c'est-à-dire lorsque Y est égale à 1,5*[Ca]+0,5*[Mg] ou à 0,25*([Ni]+[Zn]+[Cu]), on prend de préférence une fraction massique du titane comprise entre 0,4 et 0,6, de préférence égale à 0,5, et un rapport de dosage R compris entre 2,5 et 3,5, de préférence égal à 3.

Lorsque la contamination est à dominante corrosive, c'est-à-dire lorsque Y est égale à [Na]+[K] ou à [Pb], on prend de préférence une fraction massique du titane comprise entre 0,1 et 0,3, de préférence égale à 0,2, et un rapport de dosage R : (i) compris entre 4 et 5, de préférence égal à 4,5, lorsque l'équipement thermique ne comprend pas de pièce en superalliage alumine-former et que la teneur en $SO_X$ dans les produits de combustion ne dépasse pas 50 ppm en volume ; et (ii) compris entre 4,5 et 5,5, de préférence égal à 5, lorsque l'équipement thermique comprend une pièce en superalliage alumine-former, ou bien que la teneur en $SO_X$ dépasse 50 ppm en volume.

L'expression du rapport de dosage et des « fractions massiques » permettent d'écrire :

$$[Ti] = t\,R\,Y \quad et \quad [Al] = a\,R\,Y = (1 - t)\,R\,Y$$

Ces deux équations permettent de calculer les concentrations en Al et Ti à introduire dans le combustible à partir des teneurs en contaminants (paramètre Y), du rapport de dosage nécessaire (R) et de la fraction massique de titane choisie (t).

On notera que dans la définition du « rapport de dosage » de la formule (1), il serait possible de remplacer au dénominateur la quantité « Y » par la somme des concentrations des métaux délétères, soit : {[Na] + [K] + 1,5 [Ca] + 0,5 [Mg] + [Pb] + 0,25 ([Zn] + [Cu] + [Ni])}. Toutefois, la formule retenue basée sur le terme « Y » est plus avantageuse car elle produit des effets techniques équivalents pour un dosage plus économique.

Le combustible contaminé peut être un gaz (par exemple un biogaz brut ou incomplètement épuré), un liquide (par exemple un fuel pétrolier, une huile végétale ou un EMVH) ou un solide pulvérulent (par exemple du charbon; de la biomasse, des déchets) entraîné par un gaz, par exemple de l'air. Lorsque la contamination a pour origine un fluide de combustion autre que le combustible, par exemple le comburant, le traitement s'applique quel que soit le type de combustible.

Les composés de métaux actifs utilisables dans le cadre de l'invention et désignés ci après par « réactifs », sont ceux susceptibles de former dans le foyer de l'équipement thermique respectivement $Al_2O_3$ et $TiO_2$. De façon plus précise, les réactifs peuvent être les suivants :

- pour l'aluminium : oxydes tels que « $Al_2O_3\,\alpha$ » ou, mieux, la variété « $Al_2O_3\,\gamma$ » sous forme de particules microniques (ou mieux nanométriques), l'hydroxyde $Al(OH)_3$ ou oxyde hydraté $AlOOH$ (hydrargilite); sels organiques ou minéraux d'aluminium ou bien savons d'aluminium tels que les alkyl-sulfonates ou les carboxylates d'aluminium ou bien des composés organo-aluminium ;

- pour le titane : oxyde de titane ($TiO_2$, variété rutile ou anatase) sous forme micronique (ou mieux nanométrique) ou, mieux, l'acide titanique $Ti(OH)_4$ ou l'oxyde de titane hydraté ($TiO_2$-$xH_2O$) ; des sels hydrosolubles (tels que le sulfate ou nitrate de titanyle ; l'oxalate mixte d'ammonium-titane) ou bien des composés organotitane.

La possibilité d'utiliser comme réactifs une famille étendue de composés des deux métaux actifs permet d'envisager deux modes d'introduction de l'additif dans les chambres de combustion des équipements thermiques.

Le premier mode utilise le circuit de gazole : on créé soit (i) une solution d'un composé liposoluble des deux métaux actifs dans le gazole, soit (ii) une émulsion du type eau-dans-huile de composés hydrosolubles (sels) des deux métaux actifs dans le gazole, soit (iii) une suspension de $Al_2O_3$ (ou $Al(OH)_3$) et de $TiO_2$ (anhydre ou hydraté) dans le gazole.

Le deuxième mode utilise un circuit d'eau aboutissant aux chambres de combustion en procédant soit (i) à une injection d'une solution d'un sel d'aluminium et de titane, soit (ii) à une injection d'une suspension de composés insolubles des deux métaux actifs (oxydes ou oxydes hydratés finement divisés, de préférence de taille nanométrique).

En guise de circuit communiquant avec les chambres, on peut prendre le circuit d'injection d'eau destiné à la réduction des NO$_X$ ou bien un circuit créé à dessein et se terminant par des buses installées sur la face interne des couvercles des chambres.

L'intérêt du deuxième mode est d'étendre le champ d'application du traitement par les additifs mixtes aux équipements thermiques installés en environnement contaminé et équipés pour brûler seulement du gaz.

Il a également été montré que les additifs mixtes se prêtent à une méthode de traitement de fond (traitement dit « prophylactique ») consistant à injecter l'additif à un débit préréglé, constant et déterminé à partir des concentrations « nettes » moyennes en métaux délétères (qui ont été mesurées ou estimées au préalable sur une certaine période de référence), les moyennes étant calculées sur cette période de référence.

Il est aussi possible de mettre en oeuvre un traitement « prophylactique conservatif » en considérant cette fois, non pas les moyennes chronologiques ci-dessus, mais les valeurs maximales (mesurées ou estimées) des concentrations nettes en métaux délétères.

Selon une mise en oeuvre préférentielle de l'invention, on utilise le procédé décrit précédemment pour protéger les pièces chaudes d'un équipement thermique : (i) contre la corrosion par les cendres d'un métal alcalin ou le plomb ; (ii) contre l'encrassement par les cendres d'un métal alcalino-terreux, du plomb ou d'un métal de transition (dont : Ni, Cu, Zn) et (iii) contre l'action combinée de ces deux types de métaux délétères éventuellement présents simultanément.

Les composés à base de métaux actifs se présentent sous forme liposoluble ou hydrosoluble, sous forme d'une émulsion ou de microémulsion eau-dans-huile ou huile-dans-eau, ou sous forme d'une suspension aqueuse ou organique.

Les composés à base d'aluminium et de titane sont introduits dans le foyer de l'équipement thermique.

L'équipement thermique est par exemple une turbine à gaz dont la température de flamme est supérieure à 900°C et, de façon préférentielle, supérieure à 1100 °C.

Afin d'illustrer l'invention, cinq modes de réalisation sont décrits ci-après.

Exemple 1 :

On considère une turbine à gaz de technologie avancée dite de « troisième génération », installée en off-shore, en bord de mer ou sur une île, et brûlant un gaz naturel commercial parfaitement filtré et exempt de métaux. Cette turbine à gaz dont les aubes de premier étage sont en superalliage alumine-former est caractérisée par un rapport massique air/combustible de 40. La valeur maximale de la « concentration nette » en métaux alcalins spécifiée par le constructeur, rapportée au combustible, est de 0,25 mg/kg.

Dans cet « environnement contaminé », la machine est soumise à une pollution par du sodium qui est apportée par l'air ambiant sous forme de brouillards ou d'embruns marins. La concentration en sodium dans l'air ambiant est en moyenne de 0,005 mg/kg mais peut atteindre la valeur maximale de 0,020 mg/kg. Le système de filtration a une efficacité vis-à-vis des aérosols qui, non connue a priori, est difficile à mesurer et n'est pas prise en compte ici.

La « concentration nette » maximale $[Na]_{max}$ en sodium au niveau du foyer, ramenée au débit de fuel, est égale à : 40 * 0,020 = 0,8 mg/kg. La valeur de Y est donc : Y=$[Na]_{max}$ = 0,8 mg/kg et la contamination est « à dominante corrosive ».

S'agissant d'une machine de technologie avancée, on applique un « traitement conservatif » en utilisant un « rapport de dosage » élevé (R = 5) et une fraction massique de titane t dans l'additif égale à 0,2.

Les concentrations d'Al et de Ti à injecter, rapportées au débit de combustible, sont données par les équations :

$$[Ti] = t \; R \; Y$$

$$[Al] = a \; R \; Y = (1 - t) \; R \; Y,$$

Où : R = 5

t = 0,2 et
Y = 0,8 mg/kg,

soit : [Al] = 3,2 mg/kg et

[Ti] = 0,8 mg/kg

Ceci revient donc à injecter, par kilogramme de combustible, 3,2 mg d'aluminium et 0,8 mg de titane, par exemple en utilisant un additif dans lequel la fraction massique de titane sera donc de 0,2 et la fraction massique d'aluminium de 0,8.

Cette injection peut être pratiquée par voie aqueuse via le système d'injection d'eau de déNO$_X$ (injection, par exemple, de nitrate d'aluminium et de sulfate de titanyle qui sont des sels hydrosolubles) et, si la turbine à gaz ne dispose pas d'un tel circuit de déNO$_X$, à travers des buses installées sur les couvercles des chambres de combustion.

On notera par ailleurs que, vu la rapport de débit (air/combustible) de 40, les concentrations nettes en sodium, aluminium et titane dans les gaz de combustion sont 41 fois plus faibles et valent donc respectivement : 19,5 $\mu$g/kg, 78 $\mu$g/kg et 19,5 $\mu$g/kg.

Exemple 2 :

On considère une turbine à gaz de technologie de « première ou seconde génération », ne comprenant aucune pièces chaude en d'alliage alumine-former, pour laquelle la spécification du combustible est de 1 mg/kg maximum de métaux alcalins et de 2 mg/kg maximum de calcium. Cette turbine est dotée d'un système d'injection d'eau de déNO$_X$. Le combustible est un distillat lourd, très riche en soufre (1% en masse) générant une teneur en SO$_X$ dans les gaz de combustion de 200 ppm en volume et qui est contaminé de façon endémique par du sodium et du calcium qui sont sous forme de sulfonates, c'est-à-dire de savons très difficiles à ôter du fuel par lavage à l'eau. Des mesures des teneurs en contaminants ont donné :

- entre 1,2 et 2,1 mg/kg de sodium, avec une moyenne [Na]$_{moy}$ de 1,6 mg/kg
- entre 1,5 et 2,5 mg/kg de calcium avec une moyenne [Ca]$_{moy}$ de 2 mg/kg

La valeur de Y est égale à : Y = 1,5*[Ca]$_{moy}$ = 3 mg/kg. La contamination est donc « à dominante encrassante ».

On applique un traitement correspondant à cette contamination. Les concentrations d'Al et de Ti à injecter et rapportées au débit de combustible sont à nouveau données par :

$$[Ti] = t \ R \ Y$$

$$[Al] = a \ R \ Y = (1 - t) \ R \ Y$$

dans lesquelles : R = 3

    t = 0,5 et
    Y = 3 mg/kg.

Le calcul donne : [Al] = [Ti] = 4,5 mg/kg.

L'injection peut être réalisée comme dans l'exemple 3.

Bien que le traitement soit ajusté pour une contamination à dominante encrassante, il protègera aussi correctement contre la corrosion par le sodium.

Exemple 3 :

Une turbine à gaz de technologie de « première ou seconde génération » ne comprenant aucune pièce chaude en d'alliage alumine-former, fait l'objet d'une spécification de combustible qui limite à 1 mg/kg la teneur en plomb. Le combustible est un gazole à 0,2% de soufre, générant 40 ppm de SO$_X$ et contaminé de façon épisodique par du plomb tétra-éthyle. Des mesures de la teneur en plomb ont donné des valeurs comprises entre 0,8 à 2 mg/kg avec une moyenne de 1,5 mg/kg.

La contamination étant « à dominante corrosive », un traitement à l'aide d'un additif aluminium-titane sera effectué sur la base de la teneur maximale en plomb de 2 mg/kg (traitement « prophylactique conservatif »). Y =[Pb]$_{max}$ = 2 mg/kg.

La fraction massique de titane sera de 0,2 et le rapport de dosage de 4,5. Les concentrations d'Al et de Ti à injecter, rapportées au débit de combustible sont à nouveau données par :

$$[\mathrm{Ti}] = t\ R\ Y$$

$$[\mathrm{Al}] = a\ R\ Y = (1 - t)\ R\ Y$$

dans lesquelles : R=4,5

t = 0,2 et
Y= 2 mg/kg.

Le calcul donne : [Al] = 7,2 mg/kg et [Ti] = 1,8 mg/kg.

Exemple 4 :

On considère un four industriel déjà usagé et dans le foyer duquel on brûle de la biomasse consistant en de la sciure de bois brute, contenant naturellement du potassium et du calcium. La teneur en soufre dans la biomasse est très faible (0,01% en masse), ce qui génère une très faible teneur en $SO_X$ dans les fumées, mais la biomasse a été contaminée par du chlorure de sodium durant un stockage en zone marine. On souhaite surtout limiter les interventions sur les conduits d'évacuation des fumées en acier inoxydable et donc réduire raisonnablement la corrosion et l'encrassement. La teneur en sodium et potassium varie entre 5 et 8 ppm avec une moyenne de 6 mg/kg et celle en calcium varie entre 3 et 8 mg/kg avec une moyenne de 5 mg/kg. La valeur de Y vaut donc (pour un traitement non conservatif) :

$$Y = 1,5 * [\mathrm{Ca}]_{moy} = 7,5\ \mathrm{mg/kg},$$

ce qui correspond à une contamination à dominante encrassante.
Par conséquent, un traitement à l'aide d'un additif aluminium-titane et de type prophylactique est effectué en prenant une fraction massique de titane t de 0,5 (un tel dosage de $TiO_2$ est apte à protéger contre une corrosion par les chlorures) et un rapport de dosage de 3.
Les concentrations d'Al et de Ti à injecter et rapportées au débit de combustible sont à nouveau données par :

$$[\mathrm{Ti}] = t\ R\ Y$$

$$[\mathrm{Al}] = a\ R\ Y = (1 - t)\ R\ Y$$

dans lesquelles : R = 3

t = 0,5 et
Y= 7,5,

soit : [Al] = [Ti] = 11.25 mg/kg.
On peut injecter l'aluminium sous forme d'hydrargilite $Al(OH)_3$ et le titane sous forme de sulfate de titanyle, qui seront mélangés à la sciure de bois, soit sous forme solide, soit sous forme de solution aqueuse (solution de $TiOSO_4$ et suspension de $Al(OH)_3$).
Ce traitement bien qu'ajusté à une situation à dominante encrassante protègera aussi contre la corrosion.

**Revendications**

**1.** Procédé de fonctionnement d'un équipement thermique alimenté par un ensemble de fluides comprenant un combustible et un comburant, dans lequel au moins un des fluides comprend au moins un métal appartenant à l'ensemble constitué par : le sodium, le potassium, le calcium, le magnésium, le plomb, le nickel, le cuivre et le zinc, **caractérisé en ce qu'**on alimente aussi ledit équipement thermique avec des composés à base d'aluminium et de titane, et **en ce que** le rapport de dosage R, défini par l'expression ([Al]+[Ti])/[Y] dans laquelle [Y] représente le maximum des valeurs suivantes : ([Na]+[K]); (1,5*[Ca]+0,5*[Mg]); [Pb]: 0.5*([Zn]+(Cu)+[Ni]) et la notation générique [M] désigne la concentration massique du métal « M » dans l'ensemble des fluides alimentant la chambre de combustion, est supérieur ou égal à 2,5, et la fraction massique du titane définie par l'expression [Ti]/([Ai]+[Ti]), dans laquelle [Ti] et [Al] représentent respectivement les concentrations massiques en titane et aluminium dans l'ensemble des fluides alimentant la chambre de combustion, est : (i) comprise entre 0,4 et 0,6, de préférence égale à 0.5, lorsque Y est égal à (1,5*[Ca]+0,5*[Mg]) ou à 0,5*([Zn]+[Cu]+[Ni]), et (ii) comprise entre 0,1 et 0,3, de préférence égale à 0,2, lorsque Y est égal à ([Na]+[K]) ou à [Pb].

2. Procédé selon la revendication 1 dans lequel le rapport de dosage R est : (i) compris entre 2,5 et 3,5, de préférence égal à 3, lorsque Y est égal à (1,5*[Ca]+0,5*[Mg]) ou à 0,5*([Zn]+[Cu]+[Ni]) ; (ii) compris entre 4 et 5, de préférence égal à 4,5, lorsque Y est égal à ([Na]+[K]) ou à [Pb], que l'équipement thermique ne comprend pas de pièce en superalliage alumine-former et que la teneur en $SO_X$ dans les produits de combustion ne dépasse pas 50 ppm en volume et (iii) compris entre 4,5 et 5.5, de préférence égal à 5, lorsque Y est égal à ([Na]+[K]) ou à [Pb] et que l'équipement thermique comprend une pièce en superalliage alumine-former ou que la teneur en $SO_X$ dans les produits de combustion excède 50 ppm en volume.

3. Procédé selon l'une des revendications précédentes, dans lequel les composés à base d'aluminium et de titane sont sous forme liposoluble ou hydrosoluble, ou bien sous forme d'une émulsion ou d'une microémulsion cau-dans-huile ou huile-dans-eau, ou bien sous forme d'une suspension aqueuse ou organique, de préférence de nature nanométrique.

4. Procédé selon l'une des revendications 1 à 3, dans lequel les composés à base d'aluminium et de titane sont introduits au niveau du foyer de l'équipement thermique.

5. Procédé selon l'une des revendications 1 à 4, dans lequel l'équipement thermique est une turbine à gaz et préférentiellement une turbine à gaz dont la température de flamme est supérieure ou égale à 1000°C.

6. Utilisation du procédé selon les revendications 1 à 5 pour protéger les pièces chaudes de l'équipement thermique contre (i) la corrosion par les cendres d'un métal alcalin ou du plomb; (ii) l'encrassement par les cendres d'un métal alcalino-terreux, du plomb ou d'un métal de transition tel que le nickel, le zinc, le cuivre et (iii) les effets combinés de ces métaux.

**Claims**

1. Method of operating thermal equipment supplied with a number of fluids, comprising a fuel and an oxidizer, in which at least one of the fluids includes at least one metal belonging to the group formed by: sodium, potassium, calcium, magnesium, lead, nickel, copper and zinc, **characterized in that** said thermal equipment is also supplied with compounds based on aluminium and titanium and **in that** the dosage ratio R, defined by the expression ([Al]+[Ti]) /[Y] in which [Y] represents the maximum of the following values: ( [Na] + [K] ) ; (1.5*[Ca]+0.5*[Mg]); [Pb]; 0.5*([Zn] +[Cu]+[Ni]) and the generic notation [M] denotes the mass concentration of the metal "M" in all the fluids supplying the combustion chamber, is equal to or greater than 2.5, and the titanium mass fraction defined by the expression [Ti]/([Al]+[Ti]), in which [Ti] and [Al] represent the titanium mass concentration and the aluminium mass concentration, respectively, in all the fluids supplying the combustion chamber, is either (i) between 0.4 and 0.6, preferably equal to 0.5, when Y is equal to (1.5*[Ca]+0.5*[Mg]) or equal to 0.5*([Zn]+[Cu]+[Ni]); or (ii) between 0.1 and 0.3, preferably equal to 0.2, when Y is equal to ([Na]+[K]) or [Pb].

2. Method according to Claim 1, in which the dosage ratio R is either (i) between 2.5 and 3.5, preferably equal to 3, when Y is equal to (1.5*[Ca]+0.5*[Mg]) or equal to 0.5*([Zn]+[Cu]+[Ni]) ; or (ii) between 4 and 5, preferably equal to 4.5, when Y is equal to ([Na]+[K]) or [Pb], when the thermal equipment does not include parts made of an alumina-forming superalloy and when the $SO_X$ content in the combustion products does not exceed 50 ppm by volume; or (iii) between 4.5 and 5.5, preferably equal to 5, when Y is equal to ([Na]+[K]) or [Pb] and when the thermal equipment includes parts made of an alumina-forming superalloy or when the $SO_X$ content in the combustion products exceeds 50 ppm by volume.

3. Method according to either of the preceding claims, in which the compounds based on aluminium and titanium are in liposoluble or water-soluble form, or else in the form of a water-in-oil or oil-in-water emulsion or microemulsion, or else in the form of an aqueous or organic suspension, preferably a nanoscale suspension.

4. Method according to one of Claims 1 to 3, in which the compounds based on aluminium and titanium are introduced into the combustion chamber of the thermal equipment.

5. Method according to one of Claims 1 to 4, in which the thermal equipment is a gas turbine and preferably a gas turbine in which the flame temperature is equal to or greater than 1000°C.

6. Use of the method according to Claims 1 to 5 for protecting the hot parts of the thermal equipment against (i) corrosion by the ash from an alkali metal or from lead; (ii) from fouling by the ash of an alkaline-earth metal, lead or a transition metal such as nickel, zinc or copper; and (iii) the combined effects of these metals.

**Patentansprüche**

1. Verfahren zum Betrieb einer thermischen Einrichtung, die mit einer Gesamtheit von Fluiden, die einen Brennstoff und ein Oxidationsmittel umfassen, gespeist wird, wobei mindestens eines der Fluide mindestens ein Metall aus der Gruppe bestehend aus Natrium, Kalium, Calcium, Magnesium, Blei, Nickel, Kupfer und Zink umfasst, **dadurch gekennzeichnet, dass** man die thermische Einrichtung außerdem mit Verbindungen auf Basis von Aluminium und Titan speist und das Dosierungsverhältnis R, das durch den Ausdruck ([Al]+[Ti])/[Y] definiert ist, worin [Y] für das Maximum der folgenden Werte steht: ([Na]+[K]); (1,5*[Ca]+0,5*[Mg]); [Pb] ; 0,5*([Zn]+[Cu]+[Ni]); und die generische Notation [M] für die Massenkonzentration des Metalls "M" in der Gesamtheit der die Brennkammer speisenden Fluide steht und größer gleich 2,5 ist und der Massenanteil von Titan, der durch den Ausdruck [Ti]/([Al]+[Ti]) definiert ist, worin [Ti] und [Al] für die Massenkonzentrationen von Titan bzw. Aluminium in der Gesamtheit der die Brennkammer speisenden Fluide stehen, (i) zwischen 0,4 und 0,6 liegt und vorzugsweise gleich 0,5 ist, wenn Y gleich (1,5*[Ca]+0,5*[Mg]) oder 0,5*([Zn]+[Cu]+[Ni]) ist, und (ii) zwischen 0,1 und 0,3 liegt und vorzugsweise gleich 0,2 ist, wenn Y gleich ([Na]+[K]) oder [Pb] ist.

2. Verfahren nach Anspruch 1, bei dem das Dosierungsverhältnis R: (i) zwischen 2,5 und 3,5 liegt und vorzugsweise gleich 3 ist, wenn Y gleich (1,5*[Ca]+0,5*[Mg]) oder 0,5*([Zn]+[Cu]+[Ni]) ist; (ii) zwischen 4 und 5 liegt und vorzugsweise gleich 4,5 ist, wenn Y gleich ([Na]+[K]) oder [Pb] ist, die thermische Einrichtung kein Teil aus aluminiumoxidbildender Superlegierung aufweist und der $SO_x$-Gehalt in den Verbrennungsprodukten nicht über 50 Vol.-ppm liegt; und (iii) zwischen 4,5 und 5,5 liegt und vorzugsweise gleich 5 ist, wenn Y gleich ([Na]+[K]) oder [Pb] ist und die thermische Einrichtung ein Teil aus aluminiumoxidbildender Superlegierung aufweist oder der $SO_x$-Gehalt in den Verbrennungsprodukten über 50 Vol.-ppm liegt.

3. Verfahren nach einem der vorhergehenden Ansprüche, bei dem die Verbindungen auf Basis von Aluminium und Titan in fettlöslicher oder wasserlöslicher Form oder auch in Form einer Wasser-in-Öl- oder Öl-in-Wasser-Emulsion oder -Mikroemulsion oder auch in Form einer wässrigen oder organischen Suspension, die vorzugsweise nanoskalig ist, vorliegen.

4. Verfahren nach einem der Ansprüche 1 bis 3, bei dem man die Verbindungen auf Basis von Aluminium und Titan in die Brennkammer der thermischen Einrichtung einträgt.

5. Verfahren nach einem der Ansprüche 1 bis 4, bei dem es sich bei der thermischen Einrichtung um eine Gasturbine und vorzugsweise eine Gasturbine mit einer Flammentemperatur größer gleich 1000°C handelt.

6. Verwendung des Verfahrens nach einem der Ansprüche 1 bis 5 zum Schützen der heißen Teile der thermischen Einrichtung vor (i) Korrosion durch Aschen von einem Alkalimetall oder Blei; (ii) Verschmutzung durch Aschen von einem Erdalkalimetall, Blei oder einem Übergangsmetall wie Nickel, Zink oder Kupfer und (iii) den kombinierten Effekten dieser Metalle.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1207857
- US 3018172 A, Tillman
- GB 697101 A
- US 5120695 A

**Littérature non-brevet citée dans la description**

- Low temperature complete combustion of methane over titania-modified alumina-supported palladium. *FUEL, IPC SCIENCE AND TECHNOLOGY PRESS,* 01 Septembre 2002, vol. 81 (14), 1883-1887